(19) Europäisches Patentamt
European Patent Office
Office européen des brevets

(11) EP 1 953 274 A1

(12) **EUROPEAN PATENT APPLICATION**
published in accordance with Art. 158(3) EPC

(43) Date of publication:
06.08.2008 Bulletin 2008/32

(51) Int Cl.:
*D01F 9/127* (2006.01)　　*C01B 31/02* (2006.01)

(21) Application number: 06832932.5

(22) Date of filing: 20.11.2006

(86) International application number:
PCT/JP2006/323071

(87) International publication number:
WO 2007/058340 (24.05.2007 Gazette 2007/21)

(84) Designated Contracting States:
AT BE BG CH CY CZ DE DK EE ES FI FR GB GR HU IE IS IT LI LT LU LV MC NL PL PT RO SE SI SK TR

(30) Priority: 21.11.2005 JP 2005336293

(72) Inventors:
- SHAN, Jiayi
  Tokyo 100-0004 (JP)
- TSUKADA, Takayuki
  Tokyo 100-0004 (JP)
- MUNEKANE, Fuminori
  Tokyo 100-0004 (JP)
- KAWAGUCHI, Hirosuke
  Tokyo 100-0004 (JP)

(71) Applicants:
- Bussan Nanotech Research Institute Inc.
  Tokyo 100-0004 (JP)
- MITSUI & CO., LTD.
  Chiyoda-ku
  Tokyo-to 100-0004 (JP)

(74) Representative: Brochard, Pascale
  Osha Liang
  121, avenue des Champs Élysées
  75008 Paris (FR)

(54) **PROCESS FOR PRODUCING CARBON FIBER STRUCTURE**

(57) Disclosed is a method for manufacturing carbon fibrous structures each of which comprises a three dimensional network of carbon fibers, which is **characterized in that**, in the procedure of carbon fiber vapor phase deposition utilizing decomposition of organic carbon compound, at least two kinds of organic carbon compounds as carbon sources are in existence at least at predetermined thermal decomposition reaction temperature range in a reaction furnace and partial pressures of gases of these compounds are regulated so that these compounds are decomposed at mutually different decomposition temperatures, and/or a raw material gas supplied into the reaction furnace is forced to form a turbulent flow. It is possible to obtain efficiently the carbon fibrous structures each of which comprises a three dimensional network of carbon fibers and which are suitable as additives to be added to solid materials, such as resin, ceramics, metal, etc., to improve physical properties, such as electric, mechanical, or thermal properties, of the solid materials, and also as additives to be added to liquid materials, such as fuels, lubricant oils, and etc., to improve physical properties, such as thermal property, of the liquid materials.

FIG.1

## Description

## TECHNICAL FIELD

This invention relates to method for manufacturing fine carbon fibrous structures, particularly, this invention relates to method for manufacturing with good yield carbon fibrous structures that are composed of fine carbon fibers wherein each of the fibers is composed of tubular laminates of fine carbon sheets and has a varied configuration, the carbon fibrous structures being suitable as additives to be added to solid materials, such as resin, ceramics, metal, etc., to improve physical properties, such as electric, mechanical, or thermal properties, of the solid materials, and also as additives to be added to liquid materials, such as fuels, lubricant oils, and etc., to improve physical properties, such as thermal property, of the liquid materials.

## BACKGROUND ART

To date, carbon fibers have been used in various composite materials because of their good mechanical properties and high electric conductivity.

Recently, higher functionalities have come to be required for various materials. Additives which can improve physical properties, such as electric, mechanical, or thermal properties, of a matrix comprised of solid materials, such as resin, ceramics, and metal, without damaging the characteristics of the matrix have been sought after. Additionally, additives which can improve physical properties of liquids, such as fuels, oil, and lubricants have also been sought.

Incidentally, fine carbon fibers, such as carbon nano structures exemplified by the carbon nanotube (hereinafter, referred to also as "CNT".), have been attracting public attention in various fields.

The graphite layers that make up the carbon nano structures are materials normally comprised of regular arrays of six-membered rings whose structures can bring about specific electrical properties, as well as chemically, mechanically, and thermally stable properties. As long as such fine carbon fibers can retain such properties upon combining and dispersing into solid materials, including various resins, ceramics, metals, etc., or into liquid materials, including fuels, lubricant agents, etc., their usefulness as additives for improving material properties can be expected.

On the other hand, however, such fine carbon fibers unfortunately show an aggregate state even just after their synthesis. When these aggregates are used as-is, the fine carbon fibers would be poorly dispersed, and thus the product obtained would not benefit from the desirable properties of the nano structures. Accordingly, given a desired property such as electric conductivity for a matrix such as resin, it is necessary that the fine carbon fibers would be added in a large amount.

Patent Literature 1 discloses a resin composition comprising aggregates wherein each of the aggregate is composed of mutually entangled carbon fibrils having 3.5 - 70nmindiameter, and wherein the aggregates possess a diameter in the range of 0.10 to 0.25 mm with a maximum diameter of not more than 0.25 mm. It is noted that the numeric data such as the maximum diameter, diameter, etc., for the carbon fibril aggregates are those measured prior to combining with a resin, as is clear from the descriptions in the examples and other parts of the Patent Literature 1.

Patent Literature 2 discloses a composite material where a carbon fibrous material is added to the matrix, the carbon fibrous material mainly comprising aggregates each of which is composed of carbon fibers having 50 - 5000 nm in diameter, the mutual contacting points among the carbon fibers being fixed with carbonized carbonaceous substance, and each aggregates having a size of 5 $\mu$m - 500 $\mu$m. In the Patent Literature 2, the numeric data such as the size of aggregate, etc., are those measured prior to the combining into resin, too.

Using carbon fiber aggregates such as described above, it is expected that the dispersibility of carbon nano structures within a resin matrix will improve to a certain degree as compared to that of using bigger lumps of carbon fibers. The aggregates prepared by dispersing carbon fibrils under a certain shearing force, such as in a vibrating ball mill or the like according to the Patent Literature 1, however, have relatively high bulk densities. Thus, they do not fulfill the need for ideal additives that is capable of improving various characteristics, such as electric conductivity, of a matrix effectively at minuscule dosages.

The Patent Literature 2 discloses a carbon fibrous structure which is manufactured by heating carbon fibers in a state such that mutual contacting points among the carbon fibers are formed by compression molding after synthesis of the carbon fibers, and wherein fixing of fibers at the contacting points is done by carbonization of organic residues primarily attached to the surface of the carbon fibers, or carbonization of an organic compound additionally added as a binder. Since fixing of carbon fibers is performed by such a heat treatment after synthesis of the carbon fibers, the affixing forces at the contacting points are weak and do not result in good electrical properties of the carbon fibrous structures. When these carbon fibrous structures are added to a matrix such as a resin, the carbon fibers fixed at the contacting points are easily detached from each other, and the carbon fibrous structures are no longer maintained in the matrix. Therefore, it is not possible to construct preferable conductive paths in a matrix such that good electrical properties may be conferred on the matrix by a small additive amount of the fibrous structures. Furthermore, when a binder is added to promote fixing and carbonization at the contacting points, fibers in the obtained fibrous structures would have large diameters and inferior surface characteristics because the added binder is attached to the whole surface area of the fibers rather than to a limited area on the contacting points.

Patent Literature 1: Japanese patent No. 2862578
Patent Literature 2: JP-2004-119386A

**DISCLOSURE OF THE INVENTION**

**PROBLEMS TO BE SOLVED BY THIS INVENTION**

Therefore, this invention aims to provide method for manufacturing carbon fibrous structures with good yield, the carbon fibrous structures capable of improving the physical properties, such as electric, mechanical, or thermal properties, of a matrix while maintaining other properties of the matrix, when added to the matrix at a sufficiently small amount.

**MEANS FOR SOLVING THE PROBLEMS**

As a result of our diligent study for solving the above problems, we, the inventors, have found that, in order to improve the various properties of a matrix even with a small amount of additive, the effective things are to adapt carbon fibers having a diameter as small as possible; to make an sparse structure of the carbon fibers where the fibers are mutually combined tightly so that the fibers do not behave individually and which sustains their sparse state in the resin matrix; and to adapt as the carbon fibers per se ones which are designed to have a minimum amount of defects. Then, we have further studied method for manufacturing such carbon fibrous structures with good yield. Finally, we have accomplished the present invention.

Namely, the present invention for solving the above mentioned problems is, therefore, method for manufacturing carbon fibrous structures each of which comprises a three dimensional network of carbon fibers, which is characterized in that, in the procedure of carbon fiber vapor phase deposition utilizing decomposition of organic carbon compound, at least two kinds of organic carbon compounds as carbon sources are in existence at least at predetermined thermal decomposition reaction temperature range in a reaction furnace and partial pressures of gases of these compounds are regulated so that these compounds are decomposed at mutually different decomposition temperatures, and/or a raw material gas supplied into the reaction furnace is forced to form a turbulent flow.

Further, this invention discloses the method for manufacturing carbon fibrous structures, wherein as carbon sources a first organic carbon compound and a second organic carbon compound are in existence at least at predetermined thermal decomposition reaction temperature range in the reaction furnace, and the mixing molar ratio of the first carbon compound and the second carbon compound (first carbon compound / second carbon compound) is be set to be in the range of >1 to 100.

Further, this invention discloses the method for manufacturing carbon fibrous structures, wherein as a raw material gas toluene is supplied, and the toluene undergoes thermal decomposition in the reaction furnace or a preliminary heating furnace so that as carbon sources two component being of methane and benzene are in existence at the predetermined thermal decomposition reaction temperature range in the reaction furnace.

Further, this invention discloses the method for manufacturing carbon fibrous structures, wherein methane as a first carbon compound and benzene as a second carbon compound are used.

Further, this invention discloses the method for manufacturing carbon fibrous structures, wherein as raw material gases toluene and methane is supplied, and the toluene undergoes thermal decomposition in the reaction furnace or a preliminary heating furnace so that as carbon sources two component being of methane and benzene in a predetermined mixing molar ratio are in existence at the predetermined thermal decomposition reaction temperature range in the reaction furnace.

Furthermore, this invention discloses the method for manufacturing carbon fibrous structures, wherein the methane as raw material gas is supplied by recycling methane included in exhaust gas discharged from the reaction furnace.

Still further, this invention discloses the method for manufacturing carbon fibrous structures, wherein the formation of the turbulent flow is performed by placing a collision member at a position where the raw material gas flow introduced into the reaction furnace is interfered by the collision member.

In addition, this invention discloses the method for manufacturing carbon fibrous structures, wherein each of the obtained carbon fibrous structures comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers.

Furthermore, this invention discloses the method for manufacturing carbon fibrous structures, wherein as carbon sources a methane rich mixture gas is used by decomposing thermally toluene as a rawmaterial gas into methane and benzene at a preliminary heating and supplying thus obtained methane and benzene into the reaction furnace while supplying a part of exhaust gas discharged from the reaction furnace as recycling gas into the reaction furnace in combination with the above mentioned methane and benzene.

## EFFECTS OF THE INVENTION

According to the method for manufacturing carbon fibrous structures of the present invention, it is possible to obtain efficiently carbon fibrous structures each of which comprises a three dimensional network of carbon fibers, typically, carbon fibrous structures each of which is comprised of three dimensionally configured carbon fibers having ultrathin diameters and bound together by a granular part produced in a growth process of the carbon fibers so that the concerned carbon fibers extend outwardly from the granular part. The carbon fibrous structures thus obtained can disperse promptly into a matrix such as a resin upon adding, while maintaining their bulky structure. Even when they are added at a small amount to a matrix, they can be distributed uniformly over the matrix. Therefore, with respect to the electric conductivity, it is possible to obtain good electric conductive paths throughout the matrix even at a small dosage. With respect to the mechanical and thermal properties, improvements can be expected in analogous fashions, since the carbon fibrous structures are distributed evenly as fillers over the matrix with only a small dosage. Therefore, the carbon fibrous structures manufactured by the method according to the present invention can be used for various purposes preferably.

## BRIEF DESCRIPTION OF THE DRAWINGS

[Fig. 1] is a SEM example photo of an intermediate for the carbon fibrous structure (intermediate) obtained by the manufacturing method according to the present invention.
[Fig. 2] is a TEM example photo of an intermediate for the carbon fibrous structure (intermediate) obtained by the manufacturing method according to the present invention.
[Fig. 3] is a SEM example photo of a carbon fibrous structure obtained by the manufacturing method according to the present invention.
[Fig. 4A] and [Fig. 4B] are TEM example photos of a carbon fibrous structure obtained by the manufacturing method according to the present invention.
[Fig. 5] is a SEM example photo of a carbon fibrous structure obtained by the manufacturing method according to the present invention.
[Fig. 6] is a schematic diagram illustrating a generation furnace used in an Example of the present invention.
[Fig. 7] is a graph illustrating a relation between the mean diameter of carbon fibers in the carbon fibrous structures obtained in Examples of the present invention and the mixing molar ratio of methane and benzene in the raw material gas used in Examples.
[Fig. 8] is a SEM photo of carbon fibers obtained in Control.

## EXPLANATION OF NUMERALS

1 Generation furnace
2 Inlet nozzle
3 Collision member
4 Raw material mixture gas supply port
a Inner diameter of inlet nozzle
b Inner diameter of generation furnace
c Inner diameter of Collision member
d Distance from upper end of generation furnace to raw material mixture gas supply port
e Distance from raw material mixture gas supply port to lower end of collision member
f Distance from raw material mixture gas supply port to lower end of generation furnace

**BEST MODE FOR CARRYING OUT THE INVENTION**

Now, the present invention will be described in detail with reference to some embodiments.

<Manufacturing method for carbon fibrous structures>

The manufacturing method according to the present invention is characterized in that, in the procedure of carbon fiber vapor phase deposition utilizing decomposition of organic carbon compound, at least two kinds of organic carbon compounds as carbon sources are in existence at least at predetermined thermal decomposition reaction temperature range in a reaction furnace and partial pressures of gases of these compounds are regulated so that these compounds are decomposed at mutually different decomposition temperatures, and/or a raw material gas supplied into the reaction furnace is forced to form a turbulent flow, thereby carbon fibrous structures each of which comprises a three dimensional network of carbon fibers are obtained.

Basically, the manufacturing method according to the present invention is based on the manufacturing method which is generically known as vapor phase deposition method or CVD method where an organic compound such as a hydrocarbon is chemical thermally decomposed in the presence of ultrafine particles of a transition metal as a catalyst in order to obtain carbon fibers or the like. Incidentally, as mentioned later, the carbon fibrous structures (hereinafter also referred to as an "intermediate") obtained by the manufacturing method according to the present invention can undergo a high temperature heating treatment in order to enhance their properties.

.
As a raw material organic compound, hydrocarbons such as benzene, toluene, xylene; carbon monoxide (CO); and alcohols such as ethanol may be used.
In the manufacturing method according to the present invention, as carbon sources at least two carbon compounds are used. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.

Further, with respect to the words "predetermined thermal decomposition reaction temperature range in the reaction furnace", although it may be varied by the kind of carbon compounds to be used, the range should involve the decomposition temperatures for individual carbon compounds to be used. Concretely, for instance, in the case of using as the carbon sources a combination of benzene and methane, the range may denote a temperature range where these carbon compounds are at a temperature in the range of 450 ˚C to 1000 ˚C, although it is altered depending upon their composition ratio.

Therefore, the manufacturing method according to the present invention also involves an embodiment where only one kind of carbon compound such as toluene or xylene as mentioned above is used as the raw material gas, and the carbon compound is directly introduced into the reaction furnace without subjecting preliminary heating for decomposing it into two kinds of carbon compounds, and thus, the carbon compound is firstly decomposed into two carbon compounds in the reaction furnace, and thereafter, the two carbon compounds thus prepared arrive at the "predetermined thermal decomposition reaction temperature range" in the reaction furnace".

Incidentally, when as the carbon sources at least two kinds of carbon compounds are provided in the thermal decomposition reaction system, the decomposition temperatures of individual carbon compounds may be varied not only by the kinds of the carbon compounds, but also by the gas partial pressures of individual carbon compounds, or molar ratio (volume ratio) between the compounds. Therefore, as the carbon compounds, a relatively large number of combinations can be used by adjusting the composition ratio of two or more carbon compounds in the raw gas so that at least two compounds can be decomposed at mutually different temperatures.

For example, the carbon fibrous structure according to the present invention can be prepared by using two or more carbon compounds in combination, while adjusting the gas partial pressures of the carbon compounds so that each compound performs mutually different decomposition temperature within the predetermined thermal decomposition reaction temperature range, wherein two or more of carbon compounds are selected from the group consisting of alkanes such as methane, ethane, propanes, butanes, pentanes, hexanes, heptanes, particularly, alkanes having 1 -7 carbon atoms; alkenes such as ethylene; alkynes such as acetylene; aromatic or heteroaromatic hydrocarbons such as benzene, toluene, styrene, xylene; alcohols such as methanol, ethanol; and other carbon compounds involving such as carbon monoxide. Further, to optimize the mixing ratio can contribute to the efficiency of the preparation.

When as carbon sources a first carbon compound and a second carbon compound are in existence, the mixing molar ratio of the first carbon compound and the second carbon compound (first carbon compound / second carbon compound) can be set to be in the range of >1 to 100, although it is varied by the kinds of the combined carbon compounds.

When a combination of methane and benzene is utilized among such combinations of two or more carbon compounds, it is desirable that the molar ratio of methane/benzene is >1- 100, preferably, 1.1 - 20, and more preferably 3 -10.

Incidentally, the ratio is for the gas composition ratio at the above mentioned predetermined thermal decomposition reaction temperature range in the reaction furnace. For instance, when as one of carbon sources toluene is used, in consideration of the matter that 100% of the toluene decomposes into methane and benzene in proportions of 1:1 in the reaction furnace, only a deficiency of methane may be supplied separately (In the case that the toluene is decomposed into methane and benzene at a preliminary heating furnace in advance of introducing to the reaction furnace, the ratio is for the gas composition ratio at the inlet of the reaction furnace.). For example, in the case of adjusting the methane / benzene molar ratio to 3, 2 mol methane may be added to 1 mol toluene.

Using the composition ratio within such a range, it is possible to obtain the carbon fibrous structure of having the three dimensional structure.

As the methane to be added to the toluene, it is possible to utilize the methane which is contained as an unreacted form in the exhaust gas discharged from the reaction furnace in recycling, as well as a fresh methane specially supplied. Using the composition ratio within such a range, it is possible to obtain the carbon fibrous structure in which both the carbon fiber parts and granular parts are efficiently developed.

Namely, when as raw material gas toluene is used, or as carbon sources methane and benzene is used, relatively large amount of unreacted methane is remained in the exhaust gas, and thus the exhaust gas becomes a methane rich gas as compared with the methane / benzene ratio (theoretical value) in the introduced raw material gas. Thus, the exhaust gas is well worth using as methane supplying source. Recycling of the exhaust gas can contribute to reduction in the amount of carrier gas such as hydrogen, and also is preferable from the viewpoint of environmental issue since the amount of the exhaust gas discharged to the external environment can decrease.

When recycling the exhaust gas as mentioned above, it is preferable to perform the following steps of subjecting the exhaust gas discharged from the reaction furnace to dust collection using a known dust collector such as bag filter or the like in order to remove solid ingredients away from the gas, and next, subjecting thus treated gas to cooling by means of a condenser or the like into a temperature in the range of -20 ˚C to 40 ˚C in order to remove tar ingredient and so on away from the gas, and thereafter, analyzing the ingredients in the gas, preferably, in real time, and finally, regulating the flow rate of the gas to be fed back so as to obtain a predetermined gas composition on mixing it with a fresh raw material gas.

Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized in accordance with a CVD process which has been conventionally used in the art. The steps may comprise gasifying a mixture of the above mentioned hydrocarbons and catalyst as a raw material, supplying the gasified mixture into a reaction furnace along with a carrier gas such as hydrogen gas, etc., and subjecting the hydrocarbons to thermal decomposition at a temperature in the range of 800 ˚C - 1300 ˚C. By following such synthesis procedures, aggregates, each of which is of several to several tens of centimeters in size and which is composed of plural carbon fibrous structures (intermediates), each of which has a three dimensional configuration where fibers having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. When obtaining carbon fibrous structures according to the present invention, however, the balance between the thermal decomposition rate and the carbon fiber growth rate is intentionally varied. Namely, for instance, as mentioned above, to use as carbon sources at least two kinds of carbon compounds having different decomposition temperatures may allow the carbonaceous material to grow three dimensionally around the granular part as a centre, rather than in one dimensional direction.

In addition, as shown in Examples mentioned later, at the stage where the carbon fibers grows three dimensionally, if in the mixed system of a first carbon compound and a second carbon compound, for instance, in the mixed system of methane and benzene, the amount of the first carbon compound (methane) is larger than that of the second carbon compound (benzene), it is possible to observe a tendency that the growth in the longitudinal direction is accelerated and the growth in the thickness direction is repressed. On the contrary, if the amount of the second carbon compound (benzene) is heightened as compared with the amount of first carbon compound (methane), it is possible to observe a tendency that the growth in the thickness direction is accelerated and thus the outer diameter of the grown fine carbon fiber becomes larger than that of the fine carbon fiber grown in the system where the amount of the first carbon compound (methane) is larger. Thus, by adjusting the mixing ratio of these carbon compounds, it is possible to regulate the outer diameter of the fine carbon fibers.

The three dimensional growth of the carbon fibers depends not only on the balance between the thermal decomposition rate and the growing rate, but also on the selectivity of the crystal face of the catalyst particle, residence time in the reaction furnace, temperature distribution in the furnace, etc. The balance between the decomposition rate and the growing rate is affected not only by the kinds of carbon sources mentioned above, but also by reaction temperatures, and gas temperatures, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle. Accordingly, by changing the balance between the thermal decomposition rate and the growing rate intentionally, it is possible to control the growth of carbon material to occur in multi-direction rather than in single direction, and to produce three dimensional structures according to the present invention.

In order to form the above mentioned three-dimensional configuration, where the fibers are bound together by a granular part, with ease, it is desirable to optimize the compositions such as the catalyst used, the residence time in the reaction furnace, the reaction temperature and the gas temperature.

With respect to the method for manufacturing the carbon fibrous structure according to the present invention with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used hereinmeans a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it can not function as a catalyst for the fine carbon fiber. Then, the clusters further are aggregated by collisions with each other to grow into a metal crystalline particle of about 3 - 10 nm in size, and which particle comes into use as the metal catalyst fine particle for producing the fine carbon fiber.

During the catalyst formation process as mentioned above, if the vortex flows belonging to the furiously turbulent flow are present, it is possible that the collisions of carbon atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, since concentration, temperature, and etc. are homogenized by the force of vortex flow, the obtained metal catalyst fine particles become uniform in size. Additionally, during the process of producing metal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the fine carbon fibers grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the carbon fiber structure of the desired three dimensional configuration may be obtained with efficiency.

Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the carbon fiber structure according to the present invention may be formed.

The concrete means for creating the turbulence to the raw material gas flow near the supply port for the raw material gas is not particularly limited. For example, it is adaptable to provide some type of collision member at a position where the raw material gas flow introduced from the supply port can be interfered by the collision section. The shape of the collision section is not particularly limited, as far as an adequate turbulent flow can be formed in the reaction furnace by the vortex flow which is created at the collision section as the starting point. For example, embodiments where various shapes of baffles, paddles, tapered tubes, umbrella shaped elements, and etc., are used singly or in varying combinations and located at one or more positions may be adaptable.

As a matter of course, the manufacturing method according to the present invention includes not only an embodiment which utilizes the approach that two or more carbon compounds which have mutually different decomposition temperature are used in an appropriate mixing ratio and an embodiment which utilizes the approach that the raw material gas supplied into the reaction furnace from a supply port is forced to form a turbulent flow in proximity to the supply port, but also includes an embodiment which utilize both the approaches in combination. Further, the latter embodiment is more preferable.

The intermediate, obtained by heating the mixture of the catalyst and hydrocarbons at a constant temperature in the range of 800 ˚C - 1300˚C in accordance with the manufacturing method according to the present invention, has a structure that resembles sheets of carbon atoms laminated together, (and being still in half-raw, or incomplete condition). When analyzed with Raman spectroscopy, the D band of the intermediate is very large and many defects are observed. Further, the obtained intermediate is associated with unreacted raw materials, nonfibrous carbon, tar moiety, and catalyst metal.

Therefore, the intermediate may be optionally subjected to a high temperature heat treatment at 2400 - 3000 ˚C using a proper method in order to remove such residues from the intermediate and to produce the intended carbon fibrous structure with few defects.

For instance, the intermediate may be heated at 800 - 1200 ˚C to remove the unreacted raw material and volatile flux such as the tar moiety, and thereafter annealed at a high temperature of 2400 - 3000 ˚C to produce the intended structure and, concurrently, to vaporize the catalyst metal, which is included in the fibers, to remove it from the fibers. In this process, it is possible to add a small amount of a reducing gas and carbon monoxide into the inert gas atmosphere to protect the carbon structures.

By annealing the intermediate at a temperature of 2400 - 3000 ˚C, the patch-like sheets of carbon atoms are rearranged to associate mutually and then form multiple graphene sheet-like layers.

After or before such a high temperature heat treatment, the aggregates may be subjected to crushing in order to obtain carbon fibrous structures, each having an area-based circle-equivalent mean diameter of several centimeters. Then, the obtained carbon fibrous structures may be subjected to pulverization in order to obtain the carbon fibrous structures having an area-based circle-equivalent mean diameter of 50 - 100 μm. It is also possible to perform the pulverization directly without crushing. On the other hand, the initial aggregates involving plural carbon fibrous structures according to the present invention may also be granulated for adjusting shape, size, or bulk density to one's suitable for using a particular application. More preferably, in order to utilize effectively the above structure formed from the reaction, the annealing would be performed in a state such that the bulk density is low (the state that the fibers are extended as much as they can and the voidage is sufficiently large). Such a state may contribute to improved electric conductivity of a resin matrix.

As described in detail above, carbon fibrous structures each having the three dimensional configuration can be obtained with a high yield, for instance a yield of about 25 - 90 %, more preferably, about 50 - 90 % by the manufacturing method according to the present invention. The "yield" used herein denotes the ratio of the weight of collected carbon fibrous structures (first intermediate) to the weight of raw materials introduced into the reaction furnace, including catalysts and hydrocarbons, etc., except for the carrier gas.

<Carbon fibrous structures to be manufactured>

Carbon fibrous structures each having a three dimensional configuration are obtained by the manufacturing method according to the present invention. Although the detailed features of the carbon fibrous structures are not particularly limited, for instance, they may be ones as follows.

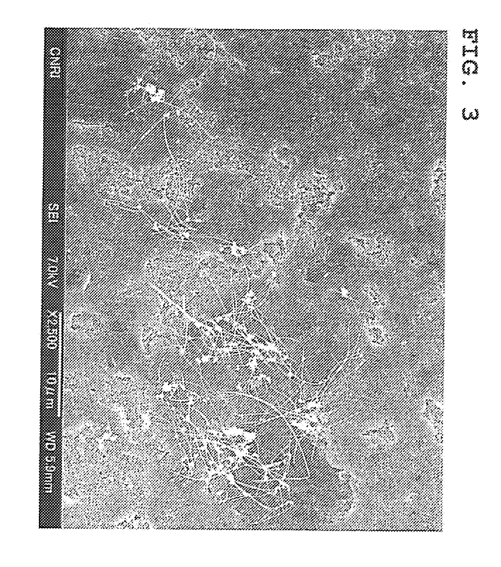

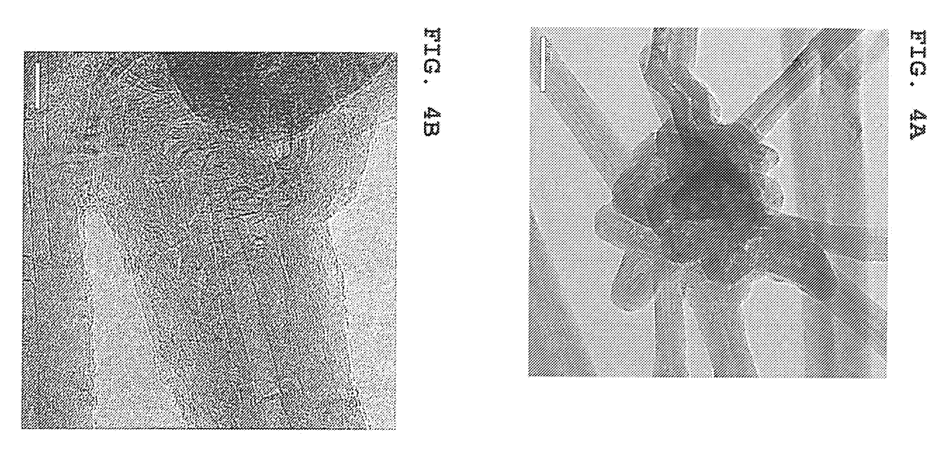

First, with respect to the appearance, the carbon fibrous structure can be typically, as shown in SEM photo of Fig. 3 and TEM photos of Fig. 4A and 4B, composed of carbon fibers each having an outside diameter of 15 - 100 nm, and a granular part at which the carbon fibers are tied together so that the concerned carbon fibers are externally elongated from the granular part.

The reason for restricting the outside diameter of the carbon fibers to a range of 15 nm to 100 nm is because when the outside diameter is less than 15 nm, the cross-sections of the carbon fibers do not have polygonal figures as described later. According to physical properties, the smaller the diameter of a fiber, the greater the number of carbon fibers will be for the same weight and/or the longer the length in the axial direction of the carbon fiber. This property would be followed by an enhanced electric conductivity. Thus, carbon fibrous structures having an outside diameter exceeding 100 nm are not preferred for use as modifiers or additives for a matrix such as a resin, etc. Particularly, it is more desirable for the outside diameter of the carbon fibers to be in the range of 20 - 70 nm. Carbon fibers that have a diameter within the preferable range and whose tubular graphene sheets are layered one by one in the direction that is orthogonal to the fiber axis, i.e., being of a multilayer type, can enjoy a high flexural rigidity and ample elasticity. In other words, such fibers would have a property of being easy to restore their original shape after undergoing any deformation. Therefore, these fibers tend to take a sparse structure in the matrix, even if the carbon fibrous structures have been compressed prior to being mixed into the matrix material.

Annealing at a temperature of not less than 2400 ˚C causes the carbon fibers to have polygonal cross-sections. Additionally, annealing lessens the spacing between the layered graphene sheets and increases the true density of the carbon fiber from 1.89 $g/cm^3$ to 2.1 $g/cm^3$. As a result, the carbon fibers become denser and have fewer defects in both the stacking direction and the surface direction of the graphene sheets that make up the carbon fiber, and their flexural rigidity (EI) and dispersibility in a resin can also be enhanced and improved.

Additionally, it is preferable that the outside diameter of a fine carbon fiber undergoes a change along the axial direction of the fiber. In the case that the outside diameter of the carbon fiber is not constant, but changes along the length of the fiber, it would be expected that some anchor effect may be provided to the carbon fiber at the interface with the matrix material, and thus migration of the carbon fibrous structure in the matrix can be restrained, leading to improved dispersion stability.

Thus, in a carbon fibrous structure according to the present invention, fine carbon fibers having a predetermined outside diameter configures the three dimensional network and are bound together by a granular part produced in a growth process of the carbon fibers so that the carbon fibers are externally elongated from the granular part. Since multiple fine carbon fibers are not only entangled with each other, but also fused together at the granular part, the carbon fibers will not disperse as single fibers, but will be dispersed as bulky carbon fibrous structures when added to a matrix such as a resin. Since the fine carbon fibers are bound together by a granular part produced in the growth process of the carbon fibers in a carbon fibrous structure according to the present invention, the carbon fibrous structure itself can enjoy superior properties such as electric property. For instance, when measuring electrical resistance under a certain pressed density, carbon fibrous structures according to the present invention have an extremely low resistivity, as compared with that of a simple aggregate of the fine carbon fibers and that of the carbon fibrous structures in which the fine carbon fibers are fixed at contacting points with a carbonaceous material or carbonized substance therefrom after the synthesis of the carbon fibers. Thus, when carbon fibrous structures according to the present invention are added and distributed in a matrix, they can form good conductive paths within the matrix.

Since the granular part is produced in the growth process of the carbon fibers as mentioned above, the carbon - carbon bonds in the granular part are well developed. Further, the granular part appears to include mixed state of $sp^2$- and $sp^3$-bonds, although it is not clear accurately. After the synthesis process (in the "intermediate" or "first intermediate" defined hereinafter ), the granular part and the fibrous parts are continuous mutually by virtue of a structure comprising patch-like sheets of carbon atoms laminated together. Further, after the high temperature treatment, at least a part of graphene layers constituting the granular part is continued on graphene layers constituting the fine carbon fibers elongated externally from the granular part, as shown in Figs. 4A and 4B. In the carbon fibrous structure according to the present invention, as symbolized by such a fact that the graphene layers constituting the granular part is continued on the graphene layers constituting the fine carbon fibers, the granular part and the fine carbon fibers are linked together (at least in a part) by carbon crystalline structural bonds. Thus, strong couplings between the granular part and each fine carbon fiber are produced.

With respect to the carbon fibers, the condition of being "extended outwardly" from the granular part used herein means principally that the carbon fibers and granular part are linked together by carbon crystalline structural bonds as mentioned above, but does not means that they are apparently combined together by any additional binding agent (involving carbonaceous ones).

As traces of the fact that the granular part is produced in the growth process of the carbon fibers as mentioned above, the granular part has at least one catalyst particle or void therein, the void being formed due to the volatilization and elimination of the catalyst particle during the heating process after the generation process. The void (or catalyst particle) is essentially independent from hollow parts which are formed in individual fine carbon fibers which are extended outwardly from the granular part (although, a few voids which happened to be associate with the hollow part may be observed).

Although the number of the catalyst particles or voids is not particularly limited, it may be about 1 - 1000 a granular particle, more preferably, about 3 - 500 a granular particle. When the granular part is formed under the presence of catalyst particles the number of which is within the range mentioned above, the granular part formed can have a desirable size as mentioned later.

The per-unit size of the catalyst particle or void existing in the granular particle may be, for example, 1 - 100 nm, preferably, 2 - 40 nm, and more preferably, 3 - 15 nm.

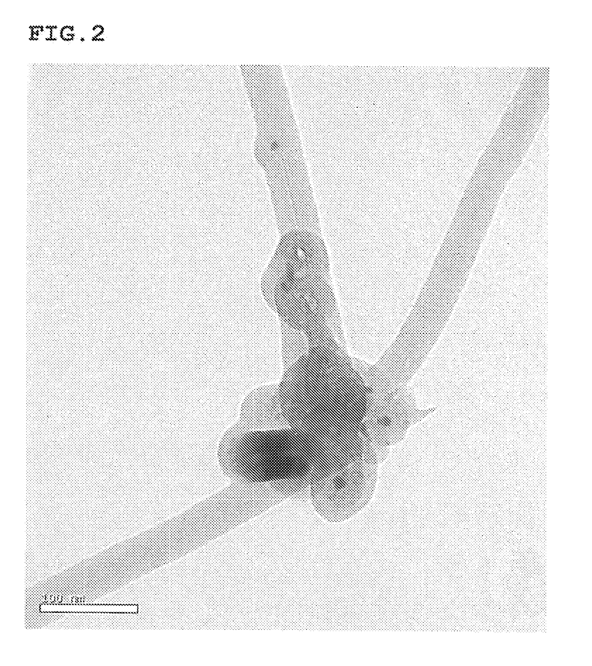

Furthermore, it is preferable that the diameter of the granular part is larger than the outside diameter of the carbon fibers as shown in Fig.2. Concretely, for example, the diameter of granular part is 1.3 - 250 times larger than the outside diameter of the carbon fibers, preferably 1.5 - 100 times, and more preferably, 2.0 - 25 times larger, on average. When the granular part, which is the binding site of the carbon fibers, has a much larger particle diameter, that is, 1.3 times or more larger than the outer diameter of the carbon fibers, the carbon fibers that are externally elongated from the granular part have stronger binding force, and thus, even when the carbon fibrous structures are exposed to a relatively high shear stress during combining with a matrix such as resin, they can be dispersed as maintaining its three-dimensional carbon fibrous structures into the matrix. When the granular part has an extremely larger particle diameter, that is, exceeding 250 times of the outer diameter of the carbon fibers, the undesirable possibility that the fibrous characteristics of the carbon fibrous structure are lost will arise. Therefore, the carbon fibrous structure will be not suitable for an additive or compounding agent to a various matrix, and thus it is not desirable. The "particle diameter of the granular part" used herein is the value which is measured by assuming that the granular part, which is the binding site for the mutual carbon fibers, is one spherical particle.

Although the concrete value for the particle diameter of the granular part will be depended on the size of the carbon fibrous structure and the outer diameter of the fine carbon fiber in the carbon fibrous structure, for example, it may be 20 - 5000 nm, more preferably, 25 - 2000 nm, and most preferably, 30 - 500 nm, on average.

Furthermore, the granular part may be roughly globular in shape because the part is produced in the growth process of the carbon fibers as mentioned above. On average, the degree of roundness thereof may lay in the range of from 0.2 to <1, preferably, 0.5 to 0.99, and more preferably, 0.7 to 0.98.

Additionally, the binding of the carbon fibers at the granular part is very tight as compared with, for example, that in the structure in which mutual contacting points among the carbon fibers are fixed with carbonaceous material or carbonized substance therefrom. It is also because the granular part is produced in the growth process of the carbon fibers as mentioned above. Even under such a condition as to bring about breakages in the carbon fibers of the carbon fibrous structure, the granular part (the binding site) is maintained stably. Specifically, for example, when the carbon fibrous structures are dispersed in a liquid medium and then subjected to ultrasonic treatment with a selected wavelength and a constant power under a load condition by which the average length of the carbon fibers is reduced to about half of its initial value as shown in the Examples described later, the changing rate in the mean diameter of the granular parts is not more than 10%, preferably, not more than 5%, thus, the granular parts, i.e., the binding sites of fibers are maintained stably.

In carbon fibrous structures according to the present invention, it is preferable that the carbon fibrous structure has an area-based circle-equivalent mean diameter of 50 - 100 $\mu$m, and more preferably, 60 - 90 $\mu$m. The "area-based circle-equivalent mean diameter" used herein is the value which is determined by taking a picture for the outside shapes of the carbon fibrous structures with a suitable electron microscope, etc., tracing the contours of the respective carbon fibrous structures in the obtained picture using a suitable image analysis software, e.g., WinRoof™ (Mitani Corp. ) , and measuring the area within each individual contour, calculating the circle-equivalent mean diameter of each individual carbon fibrous structure, and then, averaging the calculated data.

Although it is not to be applied in all cases because the circle-equivalent mean diameter may be affected by the kind of matrix material, e.g. a resin, to be complexed, the circle-equivalent mean diameter may become a factor by which the maximum length of a carbon fibrous structure upon combining into a matrix such as a resin is determined. In general, when the circle-equivalent mean diameter is not more than 50 $\mu$m, the electrical conductivity of the obtained composite may not be expected to reach a sufficient level, while when it exceeds 100 $\mu$m, an undesirable increase in viscosity may be expected to happen upon kneading of the carbon fibrous structures in the matrix. The increase in viscosity may be followed by failure of dispersion or may result in an inferior moldability.

As mentioned above, the carbon fibrous structure according to the present invention has the configuration where the fine carbon fibers existing in three dimensional network state are bound together by the granular part (s) so that the carbon fibers are externally elongated from the granular part(s). When two or more granular parts are present in a carbon fibrous structure, wherein each granular part binds the fibers so as to form the three dimensional network, the mean distance between adjacent granular parts may be, for example, 0.5 - 300 $\mu$m, preferably, 0.5 - 100 $\mu$m, and more preferably, 1 - 50 $\mu$m. The distance between adjacent granular parts used herein is determined by measuring distance from the center of a granular part to the center of another granular part which is adjacent the former granular part. When the mean distance between the granular parts is not more than 0.5 $\mu$m, a configuration where the carbon fibers form an inadequately developed three dimensional network may be obtained. Therefore, it may become difficult to form good electric conductive paths when the carbon fiber structures each having such an inadequately developed three dimensional network are added and dispersed to a matrix such as a resin. Meanwhile, when the mean distance exceeds 300 $\mu$m, an undesirable increase in viscosity may be expected to happen upon adding and dispersing the carbon fibrous structures in the matrix. The increase in viscosity may result in an inferior dispersibility.

Furthermore, the carbon fibrous structure according to the present invention may exhibit a bulky, loose form in which the carbon fibers are sparsely dispersed, because the carbon fibrous structure is comprised of carbon fibers that are configured as a three dimensional network and are bound together by a granular part so that the carbon fibers are externally elongated from the granular part as mentioned above. It is desirable that the bulk density thereof is in the range of 0.0001 - 0.05 g/cm$^3$, more preferably, 0.001 - 0.02 g/cm$^3$. When the bulk density exceeds 0.05 g/cm$^3$, the improvement of the physical properties in a matrix such as a resin would become difficult with a small dosage.

Furthermore, a carbon fibrous structure according to the present invention can enjoy good electric properties in itself, since the carbon fibers in the structure are bound together by a granular part produced in the growth process of the carbon fibers as mentioned above. For instance, it is desirable that a carbon fibrous structure according to the present invention has a powder electric resistance determined under a certain pressed density, 0.8 g/cm$^3$, of not more than 0.02 $\Omega\cdot$ cm, more preferably, 0.001 to 0.10 $\Omega\cdot$ cm. If the particle's resistance exceeds 0.02 $\Omega\cdot$ cm, it may become difficult to form good electrically conductive paths when the structure is added to a matrix such as a resin.

In order to enhance the strength and electric conductivity of a carbon fibrous structure according to the present invention, it is desirable that the graphene sheets that make up the carbon fibers have a small number of defects.

EXAMPLES

Hereinafter, this invention will be illustrated in detail by practical examples. However, the invention is not limited to the following examples.

The respective physical properties illustrated later are measured by the following protocols.

<Area based circle-equivalent mean diameter>

First, a photograph of carbon fibrous structures was taken with SEM. On the taken SEM photo, only carbon fibrous structures with a clear contour were taken as objects to be measured, and broken ones with unclear contours were omitted. Using all carbon fibrous structures that canbe taken as objects in one single field of view (approximately, 60 - 80 pieces), about 200 pieces in total were measured with three fields of views. Contours of the individual carbon fibrous structures were traced using the image analysis software, WinRoof ™ (trade name, marketed by Mitani Corp.), and area within each individual contour was measured, circle-equivalent mean diameter of each individual carbon fibrous structure was calculated, and then, the calculated data were averaged to determine the area based circle-equivalent mean diameter.

<Measurement of Bulk density>

1 g of powder was placed into a 70 mm caliber transparent cylinder equipped with a distribution plate, then air supply at 0.1 Mpa of pressure, and 1. 3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

<Particle's resistance>

1 g of CNT powder was scaled, and then press-loaded into a resinous die (inner dimensions: 40 L, 10W, 80 H (mm)). The particle's resistance when the powder was compressed to 0.8 g/cm$^3$ was determined by applying a constant current to the powder according to the four-terminal method.

<Mean diameter and roundness of the granular part, and ratio of the granular part to the fine carbon fiber>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, assuming each individual granular part which is the binding point of carbon fibers to be a particle, contours of the individual granular parts were traced using the image analysis software, WinRoof ™ (trade name, marketed by Mitani Corp.), and area within each individual contour was measured, circle-equivalent mean diameter of each individual granular part was calculated, and then, the calculated data were averaged to determine the area based circle-equivalent mean diameter.

Roundness (R) is determined by inputting value of the area (A) within each individual contour computed by the above and a measured value of each individual contour's length (L) to the following equation to calculate the roundness of each individual granular part, and then, averaging the calculated data.

$$[\text{Numerical Formula 1}]$$

$$R = A * 4\pi / L^2$$

Further, the outer diameter of the fine carbon fibers in the individual carbon fibrous structures to be measured are determined, and then, from the outer diameter determined and the circle-equivalent mean diameter of the granular part calculated as above, the ratio of circle-equivalent mean diameter to the outer diameter of the fine carbon fiber is calculated for each individual carbon fibrous structure, and then the data obtained are averaged.

<Mean distance between granular parts>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, all places where the granular parts are mutually linked with a fine carbon fiber are found out. Then, at the respective places, the distance between the adjacent granular parts which are mutually linked with the fine carbon fiber (the length of the fine carbon fiber including the center of a granular part at one end to the center of another granular part at another end) is measured, and then the data obtained are averaged.

<Destruction test for carbon fibrous structure>

To 100ml of toluene in a lidded vial, the carbon fiber structure is added at a ratio of 30 $\mu$l/ml in order to prepare the dispersion liquid sample of the carbon fibrous structure.

To the dispersion liquid sample of the carbon fibrous structure thus prepared, Ultrasound is applied using a ultrasonic cleaner (manufactured by SND Co., Ltd., Trade Name: USK-3) of which generated frequency is 38 kHz and power is 150 w, and the change of the carbon fibrous structure in the dispersion liquid is observed in the course of time aging.

First, 30 minutes after the application of ultrasound is stated, a 2 ml constant volume aliquot of the dispersion sample is pipetted, and the photo of the carbon fibrous structures in the aliquot is taken with SEM. On the obtained SEM photo, 200 pieces of fine carbon fibers in the carbon fibrous structures (fine carbon fibers at least one end of which is linked to the granular part) are selected randomly, then the length of the each individual selected fine carbon fibers is measured, and mean length $D_{50}$ is calculated. The mean length calculated is taken as the initial average fiber length.

Meanwhile, on the obtained SEM photo, 200 pieces of granular parts which each are the binding point of carbon fibers in the carbon fibrous structures are selected randomly. Assuming each individual selected granular part to be a particle, contours of the individual granular parts were traced using the image analysis software, WinRoof ™ (trade name, marketed by Mitani Corp.), and area within each individual contour was measured, circle-equivalent mean diameter of each individual granular part was calculated, and then, $D_{50}$ mean value thereof is calculated. The $D_{50}$ mean value calculated is taken as the initial average diameter of the granular parts.

Thereafter, according to the same procedure, a 2 ml constant volume aliquot of the dispersion sample is pipetted every constant periods, and the photo of the carbon fibrous structures in the each individual aliquot is taken with SEM, and the mean length $D_{50}$ of the fine carbon fibers in the carbon fibrous structure and the mean diameter $D_{50}$ of the granular part in the carbon fibrous structure are calculated individually.

At the time when the mean length $D_{50}$ of the fine carbon fibers comes to be about half the initial average fiber length (in the following Examples, 500 minutes after the application of ultrasound is stated. ) , the mean diameter $D_{50}$ of the granular part is compared with the initial average diameter of the granular parts in order to obtain the rate of variability (%) thereof.

(Example 1)

By the CVD process, carbon fibrous structures were synthesized using toluene as the raw material. The synthesis was carried out in the presence of a mixture of ferrocene and thiophene as the catalyst, and under the reducing atmosphere of hydrogen gas. Toluene and the catalyst were heated to 380 ˚C along with the hydrogen gas, and then they were supplied to the generation furnace, and underwent thermal decomposition at 1250 ˚C in order to obtain the carbon fibrous structures (first intermediate).

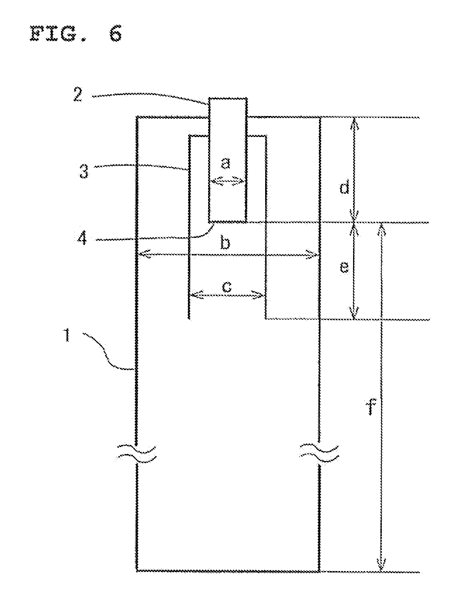

The generation furnace used for the carbon fibrous structures (first intermediate) is illustrated schematically in Fig. 6. As shown in Fig. 6, the generation furnace 1 was equipped at the upper part thereof with an inlet nozzle 2 for introducing the raw material mixture gas comprising toluene, catalyst and hydrogen gas as aforementioned into the generation furnace 1. Further, at the outside of the inlet nozzle 2, a cylindrical-shaped collision member 3 was provided. The collision member 3 was set to be able to interfere in the raw material gas flow introduced from the raw material supply port 4 located at the lower end of the inlet nozzle 2. In the generation furnace 1 used in this Example, given that the inner diameter of the inlet nozzle 2, the inner diameter of the generation furnace 1, the inner diameter of the cylindrical-shaped collision member 3, the distance from the upper end of the generation furnace 1 to the raw material mixture gas supply port 4, the distance from the raw material mixture gas supply port 4 to the lower end of the collision member 3, and the distance from the raw material mixture gas supply port 4 to the lower end of the generation furnace 1 were "a", "b", "c", "d", "e", and "f", respectively, the ratio among the above dimensions was set asa:b:c:d:e:f=1.0:3.6:1.8:3.2:2.0:

21.0. The raw material gas supplying rate to the generation furnace was 1850 NL/min., and the pressure was 1.03 atms.

As a result from five hours' continuous operation, the carbon fibrous structures (first intermediate) each having three dimensional configuration were obtained with a yield of 34.0%.

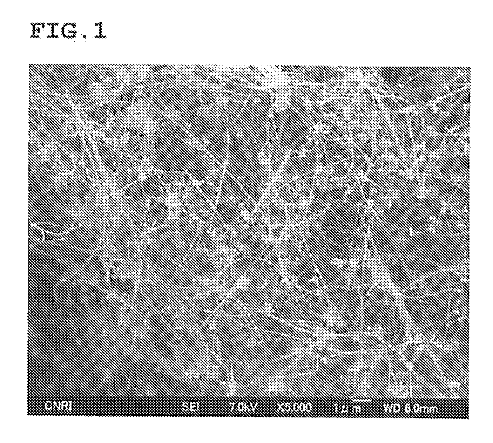

The synthesized first intermediate thus synthesized was baked at 900 ˚C in argon gas in order to remove hydrocarbons such as tar and to obtain a second intermediate. Separately, a sample for electron microscopes was prepared by dispersing the first intermediate into toluene. Figs 1 and 2 show SEM photo and TEM photo of the sample, respectively.

Further, the second intermediate underwent a high temperature heat treatment at 2600 ˚C. The obtained aggregates of the carbon fibrous structures underwent pulverization using an air flow pulverizer in order to produce the carbon fibrous structures.

A sample for electron microscopes was prepared by dispersing ultrasonically the obtained carbon fibrous structures into toluene. Fig. 3, and Figs. 4A and 4B show SEM photo and TEM photos of the sample, respectively.

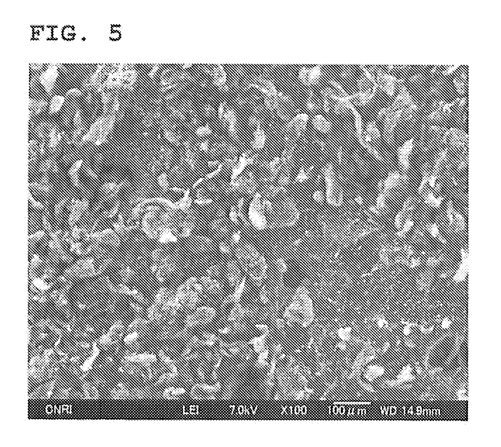

Fig. 5 shows SEM photo of the obtained carbon fibrous structures as mounted on a sample holder for electron microscope, and Table 1 shows the particle distribution of obtained carbon fibrous structures.

Further, it was found that the carbon fibrous structures had an area based circle-equivalent mean diameter of 72.8 $\mu$m, bulk density of 0.0032 g/cm$^3$, and particle's resistance of 0.0096 $\Omega \cdot$ cm.

The mean diameter of the granular parts in the carbon fibrous structures was determined as 443 nm (SD 207 nm) , that is 7.4 times larger than the outer diameter of the carbon fibers in the carbon fibrous structure. The mean roundness of the granular parts was 0.67 (SD 0.14).

Further, when the destruction test for carbon fibrous structure was performed according to the above mentioned procedure, the initial average fiber length ($D_{50}$) determined 30 minutes after the application of ultrasound was stated was found to be 12.8 $\mu$m, while the mean length $D_{50}$ determined 500 minutes after the application of ultrasound was stated was found to be 6. 7 $\mu$m, which value was about half the initial value. This result showed that many breakages were given in the fine carbon fibers of the carbon fibrous structure. Whereas the variability (decreasing) rate for the diameter of granular part was only 4.8%, when the mean diameter ($D_{50}$) of the granular part determined 500 minutes after the application of ultrasound was stated was compared with the initial average diameter ($D_{50}$) of the granular parts determined 30 minutes after the application of ultrasound was stated. Considering measurement error, etc., it was found that the granular parts themselves were hardly destroyed even under the load condition that many breakages were given in the fine carbon, and the granular parts still function as the binding site for the fibers mutually.

Tables 3,4 provides a summary of the manufacturing condition and results in Example 1, and the various physical properties of the obtained carbon fibrous structures as determined in Example 1, accompanied with the data of other Examples.

[Table 1]

| Particle Distribution (pieces) | Example 1 |
|---|---|
| <50 $\mu$m | 49 |
| 50 $\mu$m to <60 $\mu$m | 41 |
| 60 $\mu$m to <70 $\mu$m | 34 |
| 70 $\mu$m to <80 $\mu$m | 32 |
| 80 $\mu$m to <90 $\mu$m | 16 |
| 90 $\mu$m to <100 $\mu$m | 12 |
| 100 $\mu$m to <110 $\mu$m | 7 |
| ≥110 $\mu$m | 16 |
| Area based circle-equivalent mean diameter | 72.8 $\mu$m |

(Example 2)

By the CVD process, carbon fibrous structures were synthesized using a part of the exhaust gas from the generation furnace as a recycling gas in order to use as the carbon source the carbon compounds such as methane, etc., included in the recycling gas, as well as a fresh toluene.

The synthesis was carried out in the presence of a mixture of ferrocene and thiophene as the catalyst, and under the reducing atmosphere of hydrogen gas. Toluene and the catalyst as a fresh raw material were heated to 380 °C along with the hydrogen gas in a preheat furnace, while a part of the exhaust gas taken out from the lower end of the generation furnace was used as a recycling gas. After it was adjusted to 380 °C, it was mixed with the fresh raw material gas on the way of the supplying line for the fresh raw material to the generation furnace. The mixed gas was then supplied to the generation furnace.

The composition ratio in the recycling gas used were found to be $CH_4$ 7.5%, $C_6H_6$ 0.3%, $C_2H_2$ 0.7%, $C_2H_6$ 0.1%, CO 0.3%, $N_2$ 3.5%, and $H_2$ 87.6% by the molar ratio. The mixing flow rate was adjusted so that the mixing molar ratio of methane and benzene in the raw material gas to be supplied to the generation furnace, $CH_4/C_6H_6$ was set to 3.4 (wherein, it was considered that the toluene in the fresh raw material gas had been decomposed at 100% to $CH_4$: $C_6H_6$ = 1:1 by the heating in the preheat furnace.

In the final raw material gas, $C_2H_2$ , $C_2H_6$, and CO which were involved in the recycling gas to be mixed were naturally included. However, since these ingredients were very small amount, they may substantially be ignored as the carbon source.

In addition, although it is not directly related to this Example, as a result from the analysis of the composition of the recycle gas in the similar reaction systems, it was found that the composition were generally fallen into the range of $CH_4$ 6.9 - 7.8%, $C_6H_6$ 0.1 - 0.5%, $C_2H_2$ 0.1 - 0.9%, $C_2H_6$ 0.1 - 0.6%, CO 0.3%, $N_2$ 3.5%, and $H_2$ the rest (86 - 89%) by the molar ratio.

Then the mixed raw material gas were underwent thermal decomposition at 1250 °C in order to obtain the carbon fibrous structures (first intermediate) in an analogous fashion as Example 1.

The constitution of the generation furnace used for the carbon fibrous structures (first intermediate) was the same as that shown in Fig. 6, except that the cylindrical-shaped collisionmember 3 was omitted. The rawmaterial gas supplying rate to the generation furnace was 1850 NL/min., and the pressure was 1.03 atms as in the case of Example 1.

As a result from five hours' continuous operation, the carbon fibrous structures (first intermediate) each having three dimensional configuration were obtained with a yield of 61.3 %.

The synthesized first intermediate thus synthesized was baked at 900 °C in argon gas in order to remove hydrocarbons such as tar and to obtain a second intermediate. Separately, a sample for electron microscopes was prepared by dispersing the first intermediate into toluene. Sample for electron microscopes was prepared by dispersing the first intermediate into toluene. SEM photo and TEM photo obtained for the sample are in much the same with those of Example 1 shown in Figs 1 and 2, respectively.

Further, the second intermediate underwent a high temperature heat treatment at 2600 °C. The obtained aggregates of the carbon fibrous structures underwent pulverization using an air flow pulverizer in order to produce the carbon fibrous structures.

A sample for electron microscopes was prepared by dispersing ultrasonically the obtained carbon fibrous structures into toluene. SEM photo and TEM photo obtained for the sample are in much the same with those of Example 1 shown in Figs 3, 4A and 4B, respectively.

Separately, the obtained carbon fibrous structures were mounted on a sample holder for electron microscope, and observed for the particle distribution. The obtained results are shown in Table 2.

Further, it was found that the carbon fibrous structures had an area based circle-equivalent mean diameter of 75.8 $\mu$m, bulk density of 0.004 g/cm$^3$, and particle's resistance of 0.0089 $\Omega\cdot$ cm.

The mean diameter of the granular parts in the carbon fibrous structures was determined as 349.5 nm (SD 180.1 nm), that is 5. 8 times larger than the outer diameter of the carbon fibers in the carbon fibrous structure. The mean roundness of the granular parts was 0.69 (SD 0.15).

Further, when the destruction test for carbon fibrous structure was performed according to the above mentioned procedure, the initial average fiber length ($D_{50}$) determined 30 minutes after the application of ultrasound was stated was found to be 12.4 $\mu$m, while the mean length $D_{50}$ determined 500 minutes after the application of ultrasound was stated was found to be 6.3 $\mu$m, which value was about half the initial value. This result showed that many breakages were given in the fine carbon fibers of the carbon fibrous structure. Whereas the variability (decreasing) rate for the diameter of granular part was only 4.2%, when the mean diameter ($D_{50}$) of the granular part determined 500 minutes after the application of ultrasound was stated was compared with the initial average diameter ($D_{50}$) of the granular parts determined 30 minutes after the application of ultrasound was stated. Considering measurement error, etc., it was found that the granular parts themselves were hardly destroyed even under the load condition that many breakages were given in the fine carbon, and the granular parts still function as the binding site for the fibers mutually.

Tables 3,4 provides a summary of the manufacturing condition and results in Example 2, and the various physical properties of the obtained carbon fibrous structures as determined in Example 2, accompanied with the data of other Examples.

[Table 2]

| Particle Distribution (pieces) | Example 2 |
|---|---|
| <50 $\mu$m | 48 |
| 50 $\mu$m to <60 $\mu$m | 39 |
| 60 $\mu$m to <70 $\mu$m | 33 |
| 70 $\mu$m to <80 $\mu$m | 30 |
| 80 $\mu$m to <90 $\mu$m | 12 |
| 90 $\mu$m to <100 $\mu$m | 15 |
| 100 $\mu$m to <110 $\mu$m | 3 |
| ≥110 $\mu$m | 18 |
| Area based circle-equivalent mean diameter | 75.8 $\mu$m |

(Example 3-6)

By the CVD process, carbon fibrous structures were synthesized using a part of the exhaust gas from the generation furnace as a recycling gas in order to use as the carbon source the carbon compounds such as methane, etc., included in the recycling gas, as well as a fresh toluene, in an analogous fashion as Example 2.

On the synthesis, the flow rate of the recycling gas was set to be constant while the supplying amount of the separately supplied fresh toluene was varied. Thereby, the mixing flow rates were adjusted so that the mixing molar ratio of methane and benzene in the raw material gas to be supplied to the generation furnace, $CH_4/C_6H_6$ was set to 2.6, 3. 6, 4.9, 7.4, respectively (wherein, it was considered that the toluene in the fresh raw material gas had been decomposed at 100% to $CH_4:C_6H_6$ = 1:1 by the heating in the preheat furnace.),

The synthesis was carried out in the presence of a mixture of ferrocene and thiophene as the catalyst, and under the reducing atmosphere of hydrogen gas. Toluene and the catalyst as a fresh raw material were heated to 380 ˚C along with the hydrogen gas in a preheat furnace. On the other hand, the composition ratio in the recycling gas used were found to be $CH_4$ 7.0%, $C_6H_6$ 0.2%, $C_2H_2$ 0.3%, $C_2H_6$ 0.1%, CO 0.3%, $N_2$ 3.5%, and $H_2$ 88.6% by volume based mol %. After it was adjusted to 380 ˚C, it was mixed with the fresh raw material gas on the way of the supplying line for the fresh raw material to the generation furnace. The mixed gas was then supplied to the generation furnace.

In the final raw material gas, $C_2H_2$, $C_2H_6$, and CO which were involved in the recycling gas to be mixed were naturally included. However, since these ingredients were very small amount, theymay substantially be ignored as the carbon source.

Then the mixed raw material gas were underwent thermal decomposition at 1250 ˚C in order to obtain the carbon fibrous structures (first intermediate) in an analogous fashion as Example 1.

The constitution of the generation furnace used for the carbon fibrous structures (first intermediate) was the same as that shown in Fig. 6, except that the cylindrical-shaped collisionmember 3 was omitted. The rawmaterial gas supplying rate to the generation furnace was 1850 NL/min., and the pressure was 1.03 atms as in the case of Example 1.

As a result from five hours' continuous operation, the carbon fibrous structures (first intermediate) each having three dimensional configuration were obtained with a yield of 41.7 -68.8 % as shown in Table 4.

The synthesized first intermediate thus synthesized was baked at 900 ˚C in argon gas in order to remove hydrocarbons such as tar and to obtain a second intermediate. Separately, a sample for electron microscopes was prepared by dispersing the first intermediate into toluene. SEM photo and TEM photo obtained for the sample are in much the same with those of Example 1 shown in Figs 1 and 2, respectively.

Further, the second intermediate underwent a high temperature heat treatment at 2600 ˚C. The obtained aggregates of the carbon fibrous structures underwent pulverization using an air flow pulverizer in order to produce the carbon fibrous structures.

A sample for electron microscopes was prepared by dispersing ultrasonically the obtained carbon fibrous structures into toluene. SEM photo and TEM photo obtained for the sample are in much the same with those of Example 1 shown in Figs 3, 4A and 4B, respectively.

The area based circle-equivalent mean diameter of the carbon fibrousstructure,bulk density, particle'sresistance , mean diameter of the granular parts in the carbon fibrous structures and mean roundness of the granular parts of the obtained carbon fibrous structures are shown as Table 3.

Further, when the destruction test for carbon fibrous structure obtained in Example 3 was performed according to the above mentioned procedure, the initial average fiber length ($D_{50}$) determined 30 minutes after the application of ultrasound was stated was found to be 12.8 $\mu$m, while the mean length $D_{50}$ determined 500 minutes after the application of ultrasound was stated was found to be 6.7 $\mu$m, which value was about half the initial value. This result showed that many breakages were given in the fine carbon fibers of the carbon fibrous structure. Whereas the variability (decreasing) rate for the diameter of granular part was only 4.8%, when the mean diameter ($D_{50}$) of the granular part determined 500 minutes after the application of ultrasound was stated was compared with the initial average diameter ($D_{50}$) of the granular parts determined 30 minutes after the application of ultrasound was stated. Considering measurement error, etc., it was found that the granular parts themselves were hardly destroyed even under the load condition that many breakages were given in the fine carbon, and the granular parts still function as the binding site for the fibers mutually.

In addition, when the destruction test for carbon fibrous structure obtained in Examples 4 -6 was performed according to the above mentioned procedure, it was also found that the granular parts themselves were hardly destroyed even under the load condition that many breakages were given in the fine carbon, and the granular parts still function as the binding site for the fibers mutually.

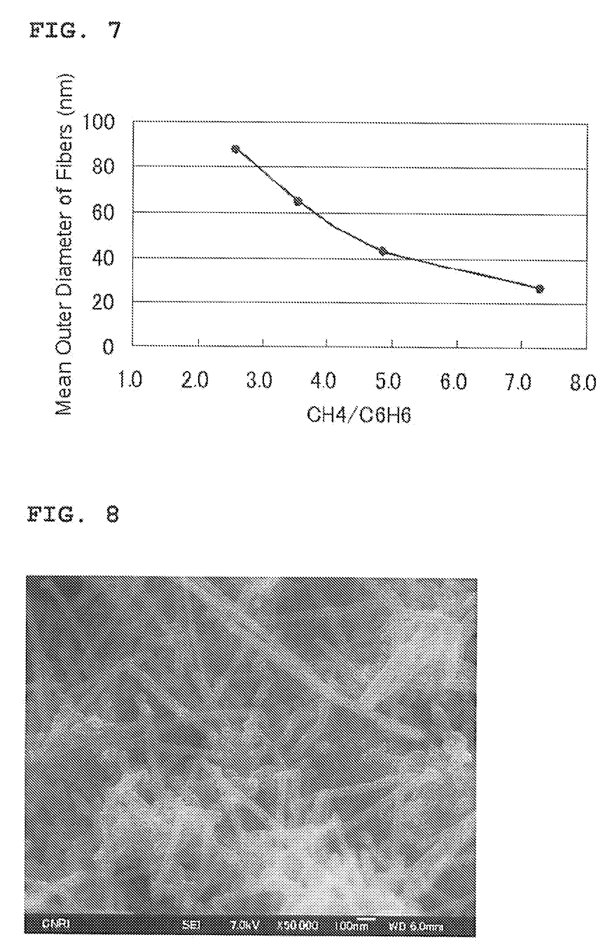

Fig. 7 is a graph illustrating a relation between the mean diameter of carbon fibers in the carbon fibrous structures obtained in Examples 3 - 6 and the mixing molar ratio of methane and benzene in the raw material gas used in these Examples.

As shown in Fig 7, at the stage where the carbon fibers grows three dimensionally, when in the mixed system of methane and benzene, the amount of methane was larger, a tendency that the growth in the longitudinal direction was accelerated while the growth in the thickness direction was repressed could be observed. On the contrary, when the amount of benzene was heightened, a tendency that the growth in the thickness direction was accelerated and thus the outer diameter of the grown fine carbon fiber became larger than that of the fine carbon fiber grown in the system where the amount of methane was larger could be observed. Thus, a possibility of regulating the outer diameter of the fine carbon fibers was indicated.

(Control 1)

Synthesis of carbon fiber was performed according to the same condition as in Example 1 except that the cylindrical-shaped collision member 3 was omitted from the constitution of the generation furnace used, and the inner diameter of the inlet nozzle 2 was about 0.4 times as large as that in Example 1. When using the inlet nozzle of such an inner diameter under the above mentioned raw material gas supplying rate and the above mentioned pressure condition, the raw material gas formed a relatively regulated downstream flow without creating vortexes.

As a result from five hours' continuous operation, carbon fibers (first intermediate) were obtained with a yield of 21.2%. However, as shown in SEM photo of Fig. 8, the obtained carbon fiber were in single fibers, but not in the carbon fiber structures each having three dimensional configuration provided with a granular part.

[Table 3]

| | Example 1 Carbon fibrous structure | Example 2 Carbon fibrous structure | Example 3 Carbon fibrous structure | Example 4 Carbon fibrous structure | Example 5 Carbon fibrous structure | Example 6 Carbon fibrous structure |
|---|---|---|---|---|---|---|
| Area based circle equivalent mean diameter | 72.8$\mu$m | 75.8$\mu$m | 68.1$\mu$m | 75.2$\mu$m | 75.4$\mu$m | 77.9$\mu$m |
| Area based circle equivalent diameter of the granular part | 443nm | 349.5nm | 405.7nm | 314.7nm | 309.1nm | 172.9nm |
| Mean roundness of the granular parts | 0.67 | 0.69 | 0.77 | 0.76 | 0.79 | 0.88 |

(continued)

|  | Example 1 Carbon fibrous structure | Example 2 Carbon fibrous structure | Example 3 Carbon fibrous structure | Example 4 Carbon fibrous structure | Example 5 Carbon fibrous structure | Example 6 Carbon fibrous structure |
|---|---|---|---|---|---|---|
| Ratio of mean diameter of granular parts to mean diameter of fine carbon fibers | 7.4 | 5.8 | 4.6 | 4.8 | 7.3 | 6.4 |
| Bulk density | 0.0032 g/cm$^3$ | 0.0040 g/cm$^3$ | 0.0074 g/cm$^3$ | 0.0042 g/cm$^3$ | 0.0034 g/cm$^3$ | 0.0023 g/cm$^3$ |
| Particle's resistance at 0.8 g/cm$^3$ | 0.0096 Ω·cm | 0.0089 Ω·cm | 0.0098 Ω·cm | 0.0094 Ω·cm | 0.0091 Ω·cm | 0.0068 Ω·cm |

[Table 4]

|  | Turbulent flow formation nozzle | Recycling gas | $CH_4/C_6H_6$ | Carbon fibrous structure | Mean outer diameter of carbon fiber (nm) | Yield (5 hrs operation) |
|---|---|---|---|---|---|---|
| Control 1 | × | × | 1.0 | × | 60.0 | 21.2% |
| Example 1 | O | × | 1.0 | ○ | 59.7 | 34.0% |
| Example 2 | × | ○ | 3.4 | ○ | 59.8 | 61.3% |
| Example 3 | ○ | ○ | 2.6 | ○ | 88.6 | 68.8% |
| Example 4 | ○ | ○ | 3.6 | ○ | 65.0 | 60.2% |
| Example 5 | ○ | ○ | 4.9 | ○ | 42.5 | 49.1% |
| Example 6 | ○ | ○ | 7.4 | ○ | 27.1 | 41.7% |

**Claims**

1. Method for manufacturing carbon fibrous structures each of which comprises a three dimensional network of carbon fibers, which is **characterized in that**, in the procedure of carbon fiber vapor phase deposition utilizing decomposition of organic carbon compound, at least two kinds of organic carbon compounds as carbon sources are in existence at least at predetermined thermal decomposition reaction temperature range in a reaction furnace and partial pressures of gases of these compounds are regulated so that these compounds are decomposed at mutually different decomposition temperatures, and/or a raw material gas supplied into the reaction furnace is forced to form a turbulent flow.

2. The method for manufacturing carbon fibrous structures carbon fibrous structure according to claim 1, wherein as carbon sources a first organic carbon compound and a second organic carbon compound are in existence at least at predetermined thermal decomposition reaction temperature range in the reaction furnace, and the mixing molar ratio of the first carbon compound and the second carbon compound (first carbon compound / second carbon compound) is be set to be in the range of >1 to 100.

3.  The method for manufacturing carbon fibrous structures carbon fibrous structure according to claim 1, wherein as a raw material gas toluene is supplied, and the toluene undergoes thermal decomposition in the reaction furnace or a preliminary heating furnace so that as carbon sources two component being of methane and benzene are in existence at the predetermined thermal decomposition reaction temperature range in the reaction furnace.

4.  The method for manufacturing carbon fibrous structures carbon fibrous structure according to claim 2, wherein methane as the first carbon compound and benzene as the second carbon compound are used.

5.  The method for manufacturing carbon fibrous structures carbon fibrous structure according to claim 2, wherein as raw material gases toluene and methane is supplied, and the toluene undergoes thermal decomposition in the reaction furnace or a preliminary heating furnace so that as carbon sources two component being of methane and benzene in a predetermined mixing molar ratio are in existence at the predetermined thermal decomposition reaction temperature range in the reaction furnace.

6.  The method for manufacturing carbon fibrous structures carbon fibrous structure according to claim 5, wherein the methane as raw material gas is supplied by recycling methane included in exhaust gas discharged from the reaction furnace.

7.  The method for manufacturing carbon fibrous structures carbon fibrous structure according to one of claims 1 -6, wherein the formation of the turbulent flow is performed by placing a collisionmember at a position where the raw material gas flow introduced into the reaction furnace is interfered by the collision member.

8.  The method for manufacturing carbon fibrous structures carbon fibrous structure according to one of claims 1 -7, wherein each of the obtained carbon fibrous structures comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers.

9.  Method for manufacturing carbon fibrous structures, wherein as carbon sources a methane rich mixture gas is used by decomposing thermally toluene as a raw material gas into methane and benzene at a preliminary heating and supplying thus obtained methane and benzene into the reaction furnace while supplying a part of exhaust gas discharged from the reaction furnace as recycling gas into the reaction furnace in combination with the methane and the benzene.

FIG.1

FIG.2

100 nm

FIG. 3

FIG. 4A

FIG. 4B

FIG. 5

FIG. 6

## FIG. 7

## FIG. 8

| | | International application No. |
|---|---|---|
| **INTERNATIONAL SEARCH REPORT** | | PCT/JP2006/323071 |

A. CLASSIFICATION OF SUBJECT MATTER
*D01F9/127*(2006.01)i, *C01B31/02*(2006.01)i

According to International Patent Classification (IPC) or to both national classification and IPC

B. FIELDS SEARCHED

Minimum documentation searched (classification system followed by classification symbols)
D01F9/00-9/32, C01B31/02

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-176244 A  (Showa Denko Kabushiki Kaisha),<br>24 June, 2004 (24.06.04),<br>Claims 1, 6, 8; Par. Nos. [0008], [0014]<br>& WO 04/44289 A1 | 1,2,7,8<br>3-6,9 |
| A | JP 2002-266170 A  (Showa Denko Kabushiki Kaisha),<br>18 September, 2002 (18.09.02),<br>Full text<br>& WO 02/49412 A1 | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>26 December, 2006 (26.12.06) | Date of mailing of the international search report<br>16 January, 2007 (16.01.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/323071 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2003-227039 A  (Showa Denko Kabushiki Kaisha),<br>15 August, 2003 (15.08.03),<br>Full text<br>& WO 03/40445 A1 | 1-9 |
| A | JP 57-117623 A  (Showa Denko Kabushiki Kaisha),<br>22 July, 1982 (22.07.82),<br>Full text<br>(Family: none) | 1-9 |
| A | JP 2003-81621 A  (Fuji Xerox Co., Ltd.),<br>19 March, 2003 (19.03.03),<br>Full text<br>& US 2003-44608 A1        & CN 1406865 A | 1-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2862578 B

- JP 2004119386 A